# EUROPÄISCHE PATENTSCHRIFT

(11) **EP 3 333 089 B1**
(45) Veröffentlichungstag und Bekanntmachung des Hinweises auf die Patenterteilung: **17.03.2021**
(21) Anmeldenummer: 17202047.1
(22) Anmeldetag: 16.11.2017
(51) Int. Cl.: B23K 31/02, B65B 13/18, B65B 27/12, A01F 15/14, B30B 9/30, B23K 1/00, B23K 1/19, B23K 101/20, B23K 103/04, B23K 103/18, B23K 103/00

(54) **DRAHTUMLENKUNG MIT HARTMETALLEINSATZ**
WIRE GUIDANCE WITH HARDENED METAL INSERT
DÉVIATION DU FIL POURVU D'UN INSERT EN MÉTAL DUR

(30) Priorität: 08.12.2016 DE 102016014588
(43) Veröffentlichungstag der Anmeldung: 13.06.2018
(73) Patentinhaber: Unotech GmbH, 49779 Niederlangen (DE)
(72) Erfinder: TELSCHER, Thomas, 49078 Osnabrück (DE)
(74) Vertreter: Lenzing Gerber Stute

(56) Entgegenhaltungen:
- EP-A1- 0 504 995
- AT-B- 241 942
- DE-U1-202010 017 707
- US-A- 812 696
- US-A- 2 655 861
- US-A- 5 433 255
- US-A1- 2003 032 489

## Beschreibung

Die vorliegende Erfindung betrifft eine Ballenpresse mit einer Drahtumlenkung.

In Ballenpressen wird zu bündelndes Pressgut, beispielsweise in Form von Papierabfällen, Kartons oder Kunststoffabfällen, üblicherweise von oben in einen Einwurfschacht geworfen, der in einen Eingabebereich mündet. Dieser Eingabebereich wird von einem Pressstempel und Seitenwänden begrenzt. Der Pressstempel presst das im Eingabebereich befindliche Material in einer Pressrichtung entweder in einen Ballenkanal oder in einen Presskasten. Im ersten Fall ist das Widerlager für das Zusammenpressen des Ballens in mehreren Presshüben von einem bereits zuvor erzeugten Ballen gebildet, gegen den das neue Material gepresst wird. Diese Pressen werden Kanalballenpressen genannt. Bei der Bauform mit einem Presskasten ist ein zusätzlicher, im Allgemeinen quer zu der Pressrichtung angeordneter Austragsstempel vorgesehen, der den im Presskasten geformten Ballen in einen Ballenkanal auspresst. Diese Bauform wird Kastenpresse genannt.

Bei beiden Bauformen folgt auf das Zusammenpressen des Materials zu einem Ballen die Umreifung um den Ballen nach der Ausgabe aus der Presse formstabil zu halten. Die Umreifung, auch Bandagierung genannt, erfolgt vielfach mittels Stahldraht, der sich bei einer Vorwärtsbewegung des Ballens in dem Ballenkanal an die in Pressrichtung voreilende Vorderseite des Ballens und zwei gegenüberliegende Längsseiten anlegt. An der Rückseite wird der Draht dann von einer Nadel quer zu der Pressrichtung geholt und mit einem vorderen Draht verdrillt.

Soweit ist am Beispiel einer Kanalballenpresse der Stand der Technik in der Druckschrift DE 10 2012 008 554 A1 beschrieben. Die Einzelheiten des Drillvorgangs sind im Zusammenhang mit der vorliegenden Erfindung als bekannt vorauszusetzen.

Wenn der Ballen in Pressrichtung den Umreifungsdraht mitnimmt, so wird der Draht von Vorratsspulen abgezogen, die unterhalb oder neben der Ballenpresse angeordnet sind. Üblicherweise werden mehrere Drähte parallel eingezogen, je nach Größe der zu bildenden Ballen etwa drei bis sechs parallele Drähte. Entsprechendes gilt auch für andere Umreifungsmaterialien z.B. aus Kunststoff. Hier wird die Erfindung aber mit Bezug auf Draht als Umreifungsmaterial beschrieben.

Jeder einzelne Draht verläuft von einer Vorratsspule durch eine Öffnung in der Wandung des Ballenkanals in einen Führungsschlitz, der in die Wandung des Ballenkanals eingearbeitet ist und der zu der Innenseite des Ballenkanals hin offen ist, so dass sich der Draht an den darin befindlichen Ballen anlegen kann. Der Draht verläuft dabei zunächst von der Vorratspule auf die Öffnung in der Wandung des Ballenkanals zu und wird dann auf der Innenseite des Ballenkanals in einer Richtung im Wesentlichen parallel zur Pressrichtung der Ballenpresse umgelenkt. Im Bereich der Umlenkung treten Kräfte auf, die im Zusammenspiel mit der dort auftretenden Reibung zwischen dem Draht und der feststehenden Oberfläche der Ballenkanalwandung zu erheblichen Verschleiß führen können, auch wenn der Draht üblicherweise eine geringere Härte aufweist als der mit dem Draht in Kontakt kommende Bereich der Wandung des Ballenkanals. Die Folge ist unerwünschter Verschleiß.

Um diesen Verschleiß zu mindern, schlägt die oben genannte DE 10 2012 008 554 A1 vor, den Draht über Rollen umzulenken. Die Umlenkung über Rollen verhindert tatsächlich eine Relativbewegung unter hoher Reibung zwischen dem Draht und der umlenkenden Komponente der Ballenpresse. Allerdings sind Umlenkungen durch Rollen in der Herstellung und in der Wartung aufwändig. Außerdem ist hierfür zusätzlicher Bauraum erforderlich.

Weitere Dokumente aus dem Stand der Technik zeigen verschleißmindernde Bauteile auf Hartmetall. So zeigen die EP 0 504 995 A1 und die US 2003/032489 A1 Zwickbacken für der Erfassen und Abtrennen von Draht bei der Herstellung von Nägeln. US 5 433 255 A zeigt eine Vorrichtung zum Verdrillen von Drähten mit Halteplatten aus Hartmetall, die die Drähte klemmen und halten sollen. Eine ständige Relativbewegung der Drähte zu den Halteplatten ist nicht vorgesehen.

Das Dokument AT 241 942 B beschreibt Richtbacken aus Hartmetall zum Einsatz in Richtmaschinen zum Richten von Drähten.

DE 20 2010 017707 U1 beschreibt eine Ballenpresse mit Bandführungen an denen Keramikhülsen zur Führung und Umlenkung von Bändern vorgesehen sind. US 2 655 861 A zeigt schließlich eine Ballenpresse mit einer Drahtumlenkung, die eine verschleißarme Beschichtung aus gehärtetem bzw. hartem Material aufweist. Die Beschichtung ist dabei in Form einer Auftragsschweißung auf der Trägermaterial aufgebracht und nicht einfach auswechselbar.

Es ist deshalb Aufgabe der vorliegenden Erfindung, eine Ballenpresse mit einer verbesserten Drahtumlenkung zu schaffen.

Diese Aufgabe wird von einer Ballenpresse mit den Merkmalen des Anspruchs 1 gelöst.

Die Ballenpresse weist eine Drahtumlenkung auf, mit einer Trägerplatte, die zur Halterung in einer Aufnahme der Ballenpresse eingerichtet ist, und mit einem Hartmetalleinsatz, der eine Ausnehmung zur Drahtführung aufweist, die sich von einer Vorderseite in Richtung auf eine Rückseite des Hartmetalleinsatzes erstreckt, wobei die Tiefe der Ausnehmung von der Vorderseite des Hartmetalleinsatzes zu der Rückseite hin abnimmt, kann eine effektive Drahtführung in der Umlenkung gewährleistet werden, die eine lange Standzeit aufweist.

Eine solche Ballenpresse weist eine höhere Standzeit der Drahtumlenkungen auf, die zudem noch bsonders einfach und platzsparend zu montieren sind. Vorzugsweise weisen der Hartmetalleinsatz und/oder die Trägerplatte einen quaderförmigen Grundkörper auf.

Dabei ist eine im Betrieb sichere Halterung des Hartmetalleinsatzes in der Trägerplatte ermöglicht, wenn die Trägerplatte eine zu dem Hartmetalleinsatz kompatible Aufnahme mit Wandungen aufweist, die zu zwei Seiten offen ist, nämlich zu den Seiten, die die Ausnehmung zur Drahtführung aufweisen.

Der Hartmetalleinsatz ist bevorzugt im Bereich der Aufnahme in die Trägerplatte eingelötet. Durch dieses Fügeverfahren werden thermische Belastungen im Betrieb verringert.

Die im Betrieb oben befindliche Oberseite des Hartmetalleinsatzes ist vorzugsweise so ausgerichtet, dass sie mit einer Oberseite der Trägerplatte fluchtet. Dadurch werden die Belastungen des dort durchlaufenden Drahtes verringert.

Dies gilt insbesondere dann, wenn die Ausnehmung zur Drahtführung des Hartmetalleinsatzes vor der Rückseite des Einsatzes endet.

Vorzugsweise ist ein Ballenkanal mit mehreren Nuten für mehrere Drähte zur Umreifung der Ballen versehen, wobei bezüglich einer Pressrichtung der Ballenpresse jedes voreilendes Ende der Nuten mit einer Drahtumlenkung, umfassend eine Trägerplatte und einen Hartmetalleinsatz, ausgestattet ist.

Eine einfache, betriebssichere und kompakte Vorrichtung ergibt sich, wenn die Drahtumlenkung in einer Aufnahme unterhalb einer Wandung des Ballenkanals angeordnet ist.

Dies gilt insbesondere, wenn die Aufnahme taschenartig ausgebildet ist und die Drahtumlenkung lose in die Aufnahme eingelegt ist. Weiter bevorzugt ist die Aufnahme entgegen der Pressrichtung einseitig offen.

Nachfolgend wird ein Ausführungsbeispiel der vorliegenden Erfindung anhand der Zeichnungen her beschrieben. Es zeigen:
- Figur 1:: eine Drahtumlenkung als Einzelteil einer perspektivischen Ansicht;
- Figur 2:: die Drahtumlenkung aus Figur 1 in einem vertikalen Längsschnitt in Förderrichtung des Drahtes;
- Figur 3:: die Drahtumlenkung in einer Stirnansicht;
- Figur 4:: einen Ausschnitt aus einem Ballenkanal mit mehreren Drahtumlenkungen in einer perspektivischen Darstellung; sowie
- Figur 5:: das Detail A aus Figur 4 in einer vergrößerten Darstellung.

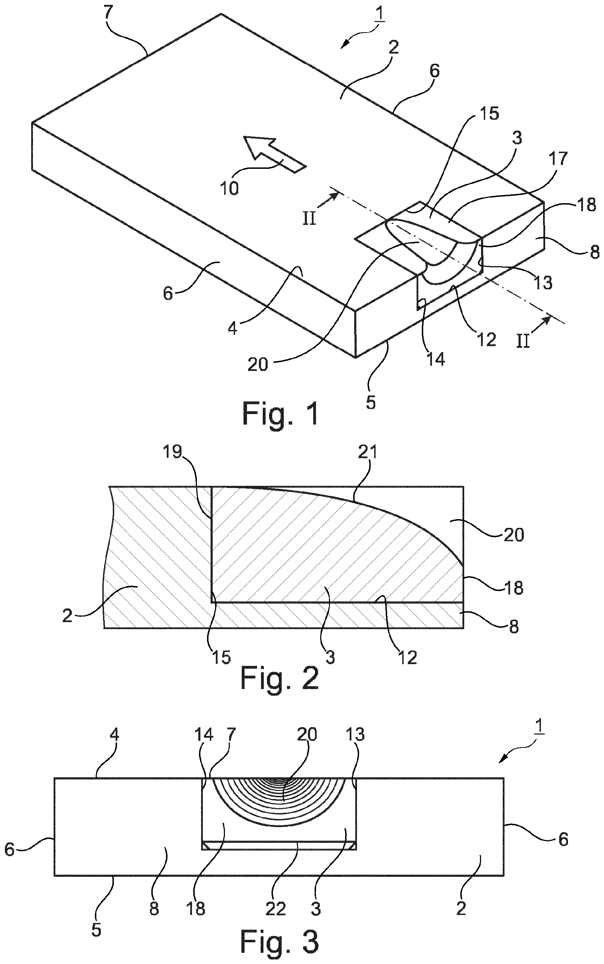

In der Figur 1 ist eine Drahtumlenkung für eine Ballenpresse in einer perspektivischen Ansicht dargestellt. Die Drahtumlenkung 1 umfasst eine Trägerplatte 2 und einen Hartmetalleinsatz 3. Die Trägerplatte 2 ist quaderförmig ausgebildet mit einer Oberseite 4, einer Unterseite 5 sowie langen Seitenwänden 6 und einer hinteren Stemmwand 7 sowie einer vorderen Stirnwand 8. Die Trägerplatte weist eine Ausnehmung auf, die in diesem Ausführungsbeispiel einen quaderförmigen Freiraum bildet, der die Oberseite 4 und die zweite Stirnseite 8 durchsetzt. Eine Richtung parallel zu den Längsseiten 6 ist in der Figur 1 mit einem Richtungspfeil eingezeichnet. Der Richtungspfeil veranschaulicht eine Laufrichtung 10 eines in der Figur 1 nicht dargestellten Drahts.

Die Unterseite 5 der Trägerplatte 2 wird nicht durchsetzt von der den Hartmetalleinsatz 3 aufnehmenden Ausnehmung. Die Flächen, die die Ausnehmung begrenzen, sind in der Figur 1 nicht erkennbar, da sie von dem Hartmetalleinsatz 3 verdeckt werden. Der Vollständigkeit halber sollen die Flächen hier anhand der sichtbaren Kanten bezeichnet werden. Die Ausnehmung weist eine Unterseite 12, zwei Längsseiten 13 und 14 und eine Rückseite 15 auf.

Die Trägerplatte 2 ist vorzugsweise aus Stahl gefertigt, während der Hartmetalleinsatz 3 aus einem handelsüblichen Hartmetall gefertigt ist, beispielsweise Wolframcarbid, Siliziumcarbid oder dergleichen. Der Hartmetalleinsatz 3 ist in die Ausnehmung der Trägerplatte 2 eingelötet und so dort befestigt.

Der Hartmetalleinsatz 3 selbst weist eine Oberseite 17 und eine in Figur 1 sichtbare Stirnseite 18 auf. Die nicht sichtbaren Längsseiten, die Unterseite und die hintere Stirnseite des Hartmetalleinsatzes 3 können einfache, plane Flächen sein. Eine rinnenförmige Ausnehmung 20 ist von der Oberseite 7 her in den Hartmetalleinsatz 3 eingearbeitet, wobei die rinnenförmige Ausnehmung 20 die Oberseite 17 und die vordere Stirnseite 18 durchsetzt, nicht jedoch die anderen vier Begrenzungsflächen des Hartmetalleinsatzes 3. Ausgehend von der vorderen Stirnseite 18, wo der freie Querschnitt der Ausnehmung 20 am größten ist, verjüngt sich die Ausnehmung 20 in Richtung der Laufrichtung 10 kontinuierlich. An ihrem in Laufrichtung 10 nacheilenden Ende des Hartmetalleinsatzes 3, das an einer Rückseite 19 nahe der hinteren Stirnfläche 15 der Ausnehmung liegt, ist der Querschnitt der Ausnehmung 20 zu Null reduziert.

In der Figur 2 ist ein vertikaler Längsschnitt durch die Drahtumlenkung 1 aus Figur 1 etwa entlang der Linie II-II in einer abgebrochenen Darstellung veranschaulicht. Gleiche Merkmale sind mit denselben Bezugsziffern gekennzeichnet.

Das Profil der Ausnehmung 20 in Laufrichtung 10 ist, wie die Figur 2 darstellt in der Schnittebene II-II etwa parabelförmig. Da der Schnitt in Figur 2 mittig durch die rinnenförmige Ausnehmung 20 verläuft, verbindet eine Profillinie 21 in Laufrichtung 10 die Punkte miteinander, die quer zu der Laufrichtung die tiefste Stelle des Profils darstellen. Die Profillinie 21 ist deshalb charakteristisch für den Verlauf der Oberfläche des Hartmetalleinsatzes 3, die im späteren Einsatz mit dem Draht in Kontakt kommt. Die Profillinie 21 ist in diesem bevorzugten Ausführungsbeispiel so gestaltet, dass zunächst eine starke Steigung ausgehend von der Stirnseite 18 vorgesehen ist, da dieser Bereich mit dem von unten von einer Vorratsspule kommenden Draht zuerst in Berührung kommt. Von dem Draht aus gesehen, der in der rinnenförmigen Ausnehmung läuft, ist die Profillinie 21 konvex ausgestaltet. Die Steigung, also der Winkel, den eine Tangente mit der Laufrichtung 10 einschließt, nimmt in Laufrichtung 10 ab. An der Stelle, an der die Profillinie 21 an die Oberseite 4 der Trägerplatte 2 anschließt, ist die Tiefe der rinnenförmigen Ausnehmung 20 vorzugsweise auf 0 reduziert, wie dies bereits zu Figur 1 beschrieben wurde. Die Steigung der Profillinie 21 ist in diesem Punkt vorzugsweise ebenfalls 0, so dass der Übergang zu der Oberseite 4 der Trägerplatte 2 ohne einen Oberflächenknick erfolgen kann. Mathematisch betrachtet ist die Profillinie 21 stetig und differenzierbar ausgebildet, also ohne Knicke oder Absätze ausgeführt.

Die rinnenförmige Ausnehmung 20 ist im Wesentlichen symmetrisch in Querrichtung zu der Laufrichtung 20. Dies ist in der Figur 3 veranschaulicht. Die Figur 3 zeigt eine Stirnansicht der Drahtumlenkung aus Figur 1, bei der die Betrachtungsrichtung der Laufrichtung des Drahtes entspricht. Der Hartmetalleinsatz 3 trägt die rinnenförmige Ausnehmung 20 mittig. Der Querschnitt der rinnenförmigen Ausnehmung 20 entspricht in jedem Bereich einem Kreisabschnitt, der nicht ganz halbkreisförmig ausgebildet ist. Der Hartmetalleinsatz 3 ist an seiner Unterseite an den Kanten mit Phasen 22 versehen, die zum einen das Einsetzen des Hartmetalleinsatzes 3 in die Ausnehmung der Trägerplatte 2 erleichtern, die andererseits aber auch den Fügevorgang erleichtern, der mittels Löten ausgeführt wird. Das verwendete Lot hat hier einen Ausweichraum, der es erlaubt, die Positionierung des Hartmetalleinsatzes 3 in der Trägerplatte 2 präzise vorzugeben, ohne dass die Position durch eventuell überschüssiges Lot beeinträchtigt wird.

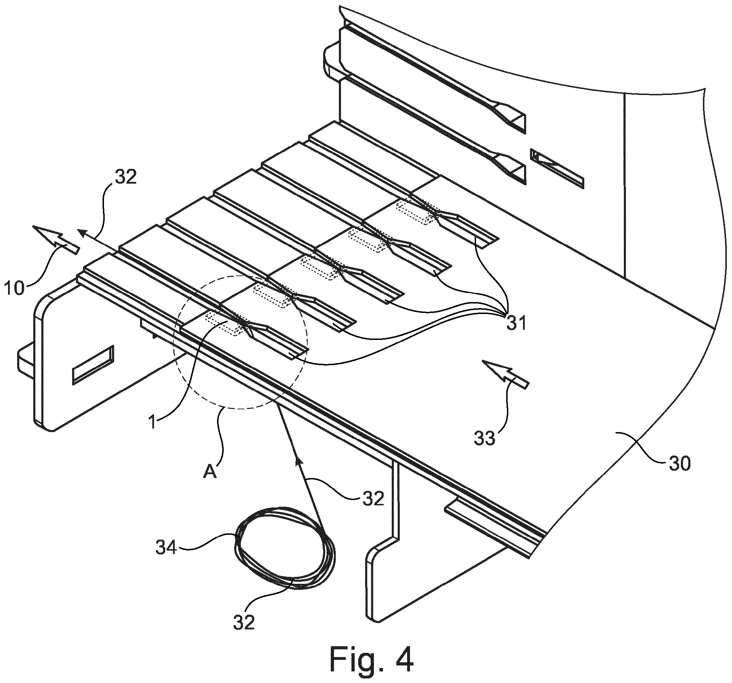

Die Figur 4 zeigt in einer perspektivischen, abgebrochenen Darstellung einen Teil eines Ballenkanals einer Ballenpresse mit Drahteinläufen. Dargestellt ist vor allen Dingen die Innenseite einer unteren Ballenkanalwand 30, die mit insgesamt fünf Ausnehmungen 31 für den Drahteinlauf von Drähten versehen ist. Dargestellt ist in Figur 4 nur ein Draht 32, der die in Betrachtungsrichtung vordere, in Pressrichtung 33 linke Ausnehmung 31 versorgt. Der Draht 32 wird in bekannter Weise von einer Vorratsspule 34 abgezogen und läuft in einem Winkel von etwa 60° gegen die Pressrichtung 33 von unten durch die Ausnehmung 31 auf die hier verdeckte, gestrichelt dargestellte Drahtumlenkung 1 zu. In der Drahtumlenkung 1 wird der Draht 32 dann in eine Richtung etwa parallel zur Pressrichtung 33 umgelenkt, so dass er von einem in dem Ballenkanal befindlichen Ballen mitgenommen wird. Die Laufrichtung 10 des Drahtes 32 ist bis auf geringfügige Abweichungen parallel zu der Pressrichtung 33 ausgerichtet.

Entsprechendes gilt für weitere, nicht dargestellte Drähte, die durch die anderen Öffnungen 31 zugeführt werden. Der dargestellte Ballenkanal ist also für die Umreifung eines gepressten Ballens mit insgesamt fünf umlaufenden Bandagen eingerichtet.

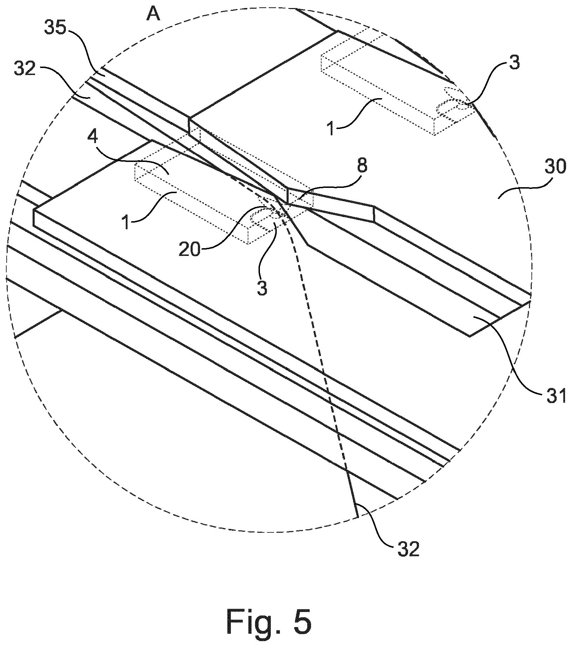

Der mit A bezeichnete Ausschnitt aus Figur 4 ist in der Figur 5 vergrößert dargestellt. Aus der Figur 5 ist ersichtlich, wie der Draht 32 von unten her durch die Öffnung 31 geführt wird und auf den Hartmetalleinsatz 3 der Drahtumlenkung 1 trifft. Von da an verläuft der Draht 32 innerhalb einer in die Wandung 30 des Ballenkanals eingearbeiteten Nut 35. Die Nut 35 ist so bemessen, dass der Draht 32 darin ohne nennenswerte mechanische Widerstände laufen kann, wenn er von einem in dem Ballenkanal befindlichen Ballen mitgenommen wird.

Die mechanische Belastung der Drahtumlenkung ist im laufenden Betrieb sehr hoch. Der Draht 32 ist üblicherweise ein Stahldraht mit einem Durchmesser etwa zwischen 3 und 5 Millimetern. Die Straffung des Drahtes 32 erfolgt über eine nicht dargestellte Bremsvorrichtung an der Vorratsspule 34, so dass der über den Ballen in dem Ballenkanal auf den Draht 32 ausgeübte Zug zunächst ausreichen muss, um die Bremse der Vorratsspule 34 zu überwinden. Der Zug muss außerdem so hoch sein, dass der Draht 32 zwischen der Vorratsspule 34 und der Drahtumlenkung 1 bereits im Wesentlichen gerade ausgerichtet wird. Dann bewirkt der auf den Draht 32 ausgeübte Zug auch, dass die Richtungsänderung, die mit einer Verformung des Drahts 32 einhergeht, im Bereich der Drahtumlenkung 1 erfolgt und der Draht 32 in Laufrichtung 10 hinter der Drahtumlenkung 1 gerade ist.

Die Zugkraft, die auf den Draht 32 ausgeübt wird, führt im Bereich der Drahtumlenkung 1 zu einer Anpresskraft des Drahtes an die Oberfläche der Drahtumlenkung. Hier ist erfindungsgemäß der Hartmetalleinsatz 3 vorgesehen, der die auftretende Zugkraft aufnimmt und der verschleißfest gegenüber der dadurch auftretenden Reibung ist. Verschleißfest bedeutet in diesem Zusammenhang nicht, dass der Hartmetalleinsatz 3 vollkommen verschleißfrei ist. Die Standzeit des Hartmetalleinsatzes 3 und damit der Drahtumlenkung 1 ist jedoch um ein Mehrfaches größer als die Standzeit bei herkömmlichen Drahtumlenkungen aus Stahl.

Die Drahtumlenkung 1 ist von unten heran der Ballenkanalwand 30 montiert. Eine besonders einfache und zuverlässige Montage kann vorsehen, dass unterhalb der Ballenkanalwand 30 eine taschenartige Halterung vorgesehen ist, die im Querschnitt dem Querschnitt der Drahtumlenkung 1 quer zu der Laufrichtung 10 angepasst ist und in die die Drahtumlenkung 1 in Richtung der Laufrichtung 10 eingeschoben werden kann. Die Aufnahme wird dazu ein geeignetes, geringfügiges Spiel aufweisen, damit die Drahtumlenkung 1 leicht einführbar ist, aber mit ausreichender Genauigkeit positioniert wird. Eine weitergehende Befestigung der Drahtumlenkung 1 ist nicht unbedingt erforderlich, da die Drahtumlenkung 1 aus der oben beschriebenen Aufnahme nicht herausgenommen werden kann oder selbstständig herausfallen kann, sobald der Draht 32 wie in Figur 5 dargestellt in die Vorrichtung eingeführt ist.

Eine solche Anordnung der Drahtumlenkung 1 ist kostengünstig, platzsparend und zuverlässig. Falls die Drahtumlenkung 1 nach längerer Betriebsdauer ausgetauscht oder gewartet werden soll, ist das Entnehmen der Drahtumlenkung 1 aus einer solchen Aufnahme besonders einfach möglich.

Die Abmessungen des Hartmetalleinsatzes 3 bezogen auf die Laufrichtung 10 betragen in der Breite 10 mm bis 30 mm, vorzugsweise 20 mm, in der Höhe 8 mm bis 20 mm, vorzugsweise 10 mm bis 13 mm, und in der Tiefe 20 mm bis 70 mm, bevorzugt 20 mm bis 40 mm und besonders bevorzugt 25 mm.

Die Trägerplatte weist in den gleichen Bezugsrichtungen folgende Abmessungen auf: in der Breite 50 mm bis 100 mm, vorzugsweise 80 mm, in der Höhe 12 mm bis 30 mm, vorzugsweise 15 mm bis 20 mm, und in der Tiefe 100 mm bis 200 mm, bevorzugt 120 mm bis 150 mm und besonders bevorzugt 130 mm.

## Patentansprüche

1. Ballenpresse aufweisend eine Drahtumlenkung, mit einer Trägerplatte (2), die in einer Aufnahme der Ballenpresse gehalten ist, und mit einem Hartmetalleinsatz (3), der eine Ausnehmung (20) zur Drahtführung aufweist, die sich von einer Stirnseite (18) in Richtung auf eine Rückseite (19) des Hartmetalleinsatzes (3) erstreckt, wobei die Tiefe der Ausnehmung (20) von der Stirnseite (18) des Hartmetalleinsatzes (3) zu der Rückseite (19) hin abnimmt.

2. Ballenpresse nach Anspruch 1, **dadurch gekennzeichnet, dass** der Hartmetalleinsatz (3) und/oder die Trägerplatte (2) einen quaderförmigen Grundkörper aufweisen.

3. Ballenpresse nach Anspruch 1 oder 2, **dadurch gekennzeichnet, dass** die Trägerplatte (2) eine zu dem Hartmetalleinsatz (3) kompatible Aufnahme mit Wandungen (12, 13, 14, 15) aufweist, die zu zwei Seiten offen ist.

4. Ballenpresse nach einem der vorhergehenden Ansprüche, **dadurch gekennzeichnet, dass** der Hartmetalleinsatz (3) im Bereich der Aufnahme in die Trägerplatte (2) eingelötet ist.

5. Ballenpresse nach einem der vorhergehenden Ansprüche, **dadurch gekennzeichnet, dass** eine Oberseite (4) der Trägerplatte (2) mit einer Oberseite (17) des Hartmetalleinsatzes (3) fluchtet.

6. Ballenpresse nach einem der vorhergehenden Ansprüche, **dadurch gekennzeichnet, dass** die Ausnehmung (20) des Hartmetalleinsatzes (3) zur Drahtführung vor der Rückseite des Einsatzes endet.

7. Ballenpresse nach einem der vorhergehenden Ansprüche, **dadurch gekennzeichnet, dass** ein Ballenkanal (30) mit mehreren Nuten (35) für mehrere Drähte (32) versehen ist, wobei bezüglich einer Pressrichtung (33) der Ballenpresse jedes voreilendes Ende mit einer Drahtumlenkung (1) umfassend eine Trägerplatte (2) und einen Hartmetalleinsatz (3) ausgestattet ist.

8. Ballenpresse nach einem der vorhergehenden Ansprüche, **dadurch gekennzeichnet, dass** die Drahtumlenkung (1) in einer Aufnahme unterhalb einer Wandung (30) des Ballenkanals angeordnet ist.

9. Ballenpresse nach Anspruch 8, **dadurch gekennzeichnet, dass** die Aufnahme taschenartig ausgebildet ist und die Drahtumlenkung (1) lose in die Aufnahme eingelegt ist.

10. Ballenpresse nach einem der vorhergehenden Ansprüche 8 oder 9, **dadurch gekennzeichnet, dass** die Aufnahme entgegen der Pressrichtung (33) einseitig offen ist.

## Claims

1. Baling press having a wire deflector, with a carrier plate (2), which is held in a seat of the baling press, and having a hard-metal insert (3), which has a recess (20) for guiding the wire, which recess extends from a front face (18) in the direction of a rear face (19) of the hard-metal insert (3), the depth of the recess (20) decreasing from the front face (18) of the hard-metal insert (3) towards the rear face (19).

2. Baling press according to claim 1, **characterized in that** the hard metal insert (3) and/or the carrier plate (2) have a cuboid base body.

3. Baling press according to claim 1 or 2, **characterized in that** the carrier plate (2) has a receptacle with walls (12, 13, 14, 15) which is compatible with the hard metal insert (3) and is open on two sides.

4. Baling press according to one of the preceding claims, **characterized in that** the hard metal insert (3) is brazed into the carrier plate (2) in the region of the receptacle.

5. Baling press according to one of the preceding claims, **characterized in that** an upper side (4) of the carrier plate (2) is aligned with an upper side (17) of the hard metal insert (3).

6. Baling press according to one of the preceding claims, **characterized in that** the recess (20) of the hard metal insert (3) for wire guidance ends before the rear side of the insert.

7. Baling press according to one of the preceding claims, **characterized in that** a bale channel (30) is provided with a plurality of grooves (35) for a plurality of wires (32), wherein, with respect to a pressing direction (33) of the baler, each leading end is provided with a wire deflector (1) comprising a support plate (2) and a hard metal insert (3).

8. Baling press according to any of the preceding claims, **characterized in that** the wire deflector (1) is arranged in a seat below a wall (30) of the bale channel.

9. Baling press according to claim 8, **characterized in that** the seat is pocket-like and the wire deflector (1) is inserted loosely into the seat.

10. Baling press according to one of the preceding claims 8 or 9, **characterized in that** the seat is open on one side counter to the pressing direction (33).

## Revendications

1. Presse à balles avec un déflecteur de fil, avec une plaque de support (2), qui est maintenue dans un siège de la presse à balles, et avec un insert en métal dur (3), qui présente un évidement (20) pour le guidage du fil, qui s'étend d'une face avant (18) en direction d'une face arrière (19) de l'insert en métal dur (3), la profondeur de l'évidement (20) diminuant de la face avant (18) de l'insert en métal dur (3) vers la face arrière (19).

2. Presse à balles selon la revendication 1, **caractérisée en ce que** l'insert en métal dur (3) et/ou la plaque de support (2) présentent un corps de base parallélépipédique.

3. Presse à balles selon la revendication 1 ou 2, **caractérisée en ce que** la plaque de support (2) présente un réceptacle avec des parois (12, 13, 14, 15) qui est compatible avec l'insert en métal dur (3) et qui est ouvert sur deux côtés.

4. Presse à balles selon l'une des revendications précédentes, **caractérisée en ce que** l'insert en métal dur (3) est brasé dans la plaque de support (2) dans la zone du réceptacle.

5. Presse à balles selon l'une des revendications précédentes, **caractérisée en ce qu'**une face supérieure (4) de la plaque de support (2) est alignée avec une face supérieure (17) de l'insert en métal dur (3).

6. Presse à balles selon l'une des revendications précédentes, **caractérisée en ce que** l'évidement (20) de l'insert en métal dur (3) pour le guidage du fil se termine avant la face arrière de l'insert.

7. Presse à balles selon l'une des revendications précédentes, **caractérisée en ce qu'**un canal de balle (30) est pourvu d'une pluralité de rainures (35) pour une pluralité de fils (32), dans laquelle, par rapport à une direction de pressage (33) de la presse à balles, chaque extrémité avant est pourvue d'un déflecteur de fil (1) comprenant une plaque de support (2) et un insert en métal dur (3).

8. Presse à balles selon l'une des revendications précédentes, **caractérisée en ce que** le déflecteur de fil (1) est disposé dans un siège en dessous d'une paroi (30) du canal de la balle.

9. Presse à balles selon la revendication 8, **caractérisée en ce que** le siège est en forme de poche et le déflecteur de fil (1) est inséré de manière lâche dans le siège.

10. Presse à balles selon l'une des revendications précédentes 8 ou 9, **caractérisée en ce que** le siège est ouvert d'un côté dans le sens contraire à la direction de pressage (33).
